# EUROPEAN PATENT SPECIFICATION

(11) **EP 3 348 932 B1**
(45) Date of publication and mention of the grant of the patent: **28.08.2019**
(21) Application number: 18151462.1
(22) Date of filing: 12.01.2018
(51) Int. Cl.: F25B 1/053, F25B 41/04, F25B 49/02, F25B 25/00

(54) **REFRIGERATION CYCLE APPARATUS**
KÄLTEKREISLAUFVORRICHTUNG
APPAREIL DE CYCLE DE RÉFRIGÉRATION

(30) Priority: 16.01.2017 JP 2017004914
(43) Date of publication of application: 18.07.2018
(73) Proprietor: Panasonic Intellectual Property Management Co., Ltd., Osaka-shi, Osaka 540-6207 (JP)
(72) Inventor: MARUHASHI, Iori, Osaka, 540-6207 (JP); KAWANO, Bunki, Osaka, 540-6207 (JP); TAMURA, Tomoichiro, Osaka, 540-6207 (JP); KUSAKA, Michiyoshi, Osaka, 540-6207 (JP); HAYASHI, Yoshimi, Osaka, 540-6207 (JP)
(74) Representative: Eisenführ Speiser

(56) References cited:
- EP-A1- 2 865 968
- US-A1- 2014 053 596

## Description

### BACKGROUND

### 1. Technical Field

The present disclosure relates to a refrigeration cycle apparatus.

### 2. Description of the Related Art

In a refrigeration cycle apparatus using a turbo compressor, during a non-steady-state operation, such as a startup operation or a partial load operation, a reverse flow phenomenon (surge) of refrigerant from a discharge port of a turbo compressor to a suction port thereof may occur. The surge causes noise and shaft vibration. A main cause of the surge is that the pressure ratio in the refrigeration cycle apparatus exceeds an allowable value at a particular rotational speed of the turbo compressor. That is, when the pressure ratio is too high relative to the rotational speed of the turbo compressor, the surge occurs. A reduction in the pressure ratio is effective in order to prevent the surge.

As illustrated in Fig. 9, the turbo refrigerator disclosed in Japanese Unexamined Patent Application Publication No. 3-290093 includes a turbo compressor 1, a condenser 2, a pressure-reduction valve 3, an evaporator 4, a hot-gas bypass valve 5, and a hot-gas bypass passage 6. When the hot-gas bypass valve 5 is opened, part of high-pressure gas discharged from the turbo compressor 1 is introduced into the evaporator 4 through the hot-gas bypass passage 6. Thus, the pressure ratio decreases to an allowable value, which prevents the surge.

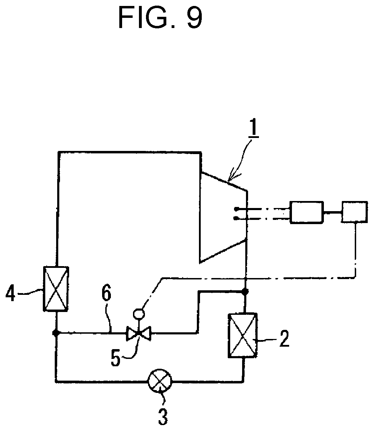

In general, the pressure ratio in a refrigeration cycle apparatus depends largely on the type of refrigerant. Accordingly, with the configuration of the related art illustrated in Fig. 9, although a sufficient effect is recognized in a refrigeration cycle apparatus using a particular refrigerant, there is a possibility that no sufficient effect is recognized in a refrigeration cycle apparatus using another refrigerant.

US patent application 2014/0053596 discloses a refrigeration apparatus which includes: a vapor channel that directs a refrigerant vapor from an evaporator to a condenser; a liquid channel that directs a refrigerant liquid from the condenser to the evaporator; a first circulation path that allows the refrigerant liquid retained in the evaporator to circulate via a first heat exchanger; and a second circulation path that allows the refrigerant liquid retained in the condenser to circulate via a second heat exchanger. A first switching means and a second switching means are provided on the first circulation path and the second circulation path. The first switching means and the second switching means are four-way valves.

### SUMMARY

One non-limiting and exemplary embodiment provides a technology for more reliably preventing surge.

In one general aspect, the techniques disclosed here feature a refrigeration cycle apparatus including: an evaporator that retains liquid-phase refrigerant and that evaporates the liquid-phase refrigerant to generate gas-phase refrigerant; a turbo compressor that compresses the gas-phase refrigerant generated in the evaporator; a condenser that condenses the gas-phase refrigerant compressed by the turbo compressor to generate liquid-phase refrigerant and that retains the liquid-phase refrigerant generated in the condenser; a first flow passage that is connected to a first part of the evaporator; a second flow passage that is connected to a second part of the evaporator; a third flow passage that is connected to a first part of the condenser; a fourth flow passage that is connected to a second part of the condenser; a switching mechanism that includes a valve and that switches a state of interconnection among the first flow passage, the second flow passage, the third flow passage, and the fourth flow passage to one connection state by use of the valve, the one connection state being selected from a plurality of connection states including a first connection state in which the first flow passage and the fourth flow passage are connected to each other, and the second flow passage and the third flow passage are connected to each other; a first pump that is disposed on the second flow passage and that supplies the liquid-phase refrigerant retained in the evaporator toward the switching mechanism; a second pump that is disposed on the fourth flow passage and that supplies the liquid-phase refrigerant retained in the condenser toward the switching mechanism; and a controller that controls the switching mechanism to switch the state of interconnection among the first flow passage, the second flow passage, the third flow passage, and the fourth flow passage to the first connection state when the turbo compressor is in a surge state or a choke state.

According to the technology disclosed herein, it is possible to more reliably prevent surge.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram illustrating the configuration of a refrigeration cycle apparatus according to a first embodiment;
Fig. 2 is a diagram of a switching mechanism including a four-way valve;
Fig. 3 is a diagram of a switching mechanism including two three-way valves;
Fig. 4 is a diagram of a switching mechanism including four valves;
Fig. 5 is a graph illustrating a characteristic of a turbo compressor;
Fig. 6 is a flowchart of surge control to be executed in the refrigeration cycle apparatus according to the first embodiment;
Fig. 7 is a diagram illustrating a refrigeration cycle apparatus according to a second embodiment;
Fig. 8 is a flowchart of surge control to be executed in the refrigeration cycle apparatus according to the second embodiment; and
Fig. 9 is a diagram illustrating the configuration of a turbo refrigerator of related art.

### DETAILED DESCRIPTION

### (Knowledge Underlying Present Disclosure)

The configuration of the related art illustrated in Fig. 9 is useful for, for example, a refrigeration cycle apparatus using a fluorocarbon-based refrigerant. Meanwhile, a refrigeration cycle apparatus using a low-pressure refrigerant is operated with a higher pressure ratio than that in a refrigeration cycle apparatus using a fluorocarbon-based refrigerant. For example, the pressure ratio in a refrigeration cycle apparatus using water is about three times the pressure ratio in a refrigeration cycle apparatus using a fluorocarbon-based refrigerant. In this case, even when the hot-gas bypass passage illustrated in Fig. 9 is provided, it is difficult to significantly change the temperature of refrigerant liquid retained in the condenser and the temperature of refrigerant liquid retained in the evaporator, and it is also difficult to reduce the pressure ratio to a sufficiently low ratio. Accordingly, there is a demand for a technology that is also useful for surge prevention in a refrigeration cycle apparatus using a low-pressure refrigerant.

A refrigeration cycle apparatus according to a first aspect of the present disclosure includes:
an evaporator that retains liquid-phase refrigerant and that evaporates the liquid-phase refrigerant to generate gas-phase refrigerant;
a turbo compressor that compresses the gas-phase refrigerant generated in the evaporator;
a condenser that condenses the gas-phase refrigerant compressed by the turbo compressor to generate liquid-phase refrigerant and that retains the liquid-phase refrigerant generated in the condenser;
a first flow passage that is connected to a first part of the evaporator;
a second flow passage that is connected to a second part of the evaporator;
a third flow passage that is connected to a first part of the condenser;
a fourth flow passage that is connected to a second part of the condenser;
a switching mechanism that includes a valve and that switches a state of interconnection among the first flow passage, the second flow passage, the third flow passage, and the fourth flow passage to one connection state by use of the valve, the one connection state being selected from a plurality of connection states including a first connection state in which the first flow passage and the fourth flow passage are connected to each other, and the second flow passage and the third flow passage are connected to each other;
a first pump that is disposed on the second flow passage and that supplies the liquid-phase refrigerant retained in the evaporator toward the switching mechanism;
a second pump that is disposed on the fourth flow passage and that supplies the liquid-phase refrigerant retained in the condenser toward the switching mechanism; and
a controller that controls the switching mechanism to switch the state of interconnection among the first flow passage, the second flow passage, the third flow passage, and the fourth flow passage to the first connection state when the turbo compressor is in a surge state or a choke state.

According to the first aspect, when the compressor is in the surge state or the choke state, the state of interconnection among the first to fourth flow passages is switched to the first connection state. The refrigerant liquid retained in the evaporator and the refrigerant liquid retained in the condenser are mixed in each of the evaporator and the condenser. The temperature of the refrigerant liquid retained in the evaporator increases, and the pressure in the evaporator also increases. The temperature of the refrigerant liquid retained in the condenser decreases, and the pressure in the condenser also decreases. Since the pressure ratio can be reduced to an allowable value (a threshold), surge or choke in the compressor is prevented.

In a second aspect of the present disclosure, for example, the first part of the evaporator is positioned above a liquid surface of the liquid-phase refrigerant retained in the evaporator; the second part of the evaporator is positioned below the liquid surface of the liquid-phase refrigerant retained in the evaporator; and the plurality of connection states further includes a second connection state in which the first flow passage and the second flow passage are connected to each other, and the third flow passage and the fourth flow passage are connected to each other. When the state of interconnection among the first to fourth flow passages is the second connection state, and the first pump is driven, the refrigerant liquid retained in the evaporator circulates through the first flow passage and the second flow passage. As a result, evaporation of the refrigerant liquid is promoted.

In a third aspect of the present disclosure, for example, when the turbo compressor is in the surge state or the choke state, the controller according to the second aspect controls the switching mechanism to switch the state of interconnection among the first flow passage, the second flow passage, the third flow passage, and the fourth flow passage from the second connection state to the first connection state. The third aspect ensures that the advantage in the first aspect is obtained.

In a fourth aspect of the present disclosure, for example, the refrigeration cycle apparatus according to one of the first to third aspects further includes a first valve that is disposed on the first flow passage and that has an adjustable degree of opening, and a second valve that is disposed on the third flow passage and that has an adjustable degree of opening. According to the fourth aspect, the first valve and the second valve allow the pressure ratio to be finely adjusted to a desired value.

In a fifth aspect of the present disclosure, for example, the controller in the refrigeration cycle apparatus according to the fourth aspect controls the first valve to increase the degree of opening of the first valve and controls the second valve to increase the degree of opening of the second valve, when the state of interconnection among the first flow passage, the second flow passage, the third flow passage, and the fourth flow passage is in the first connection state, and a difference between a temperature of the liquid-phase refrigerant retained in the condenser and a temperature of the liquid-phase refrigerant retained in the evaporator is larger than or equal to a threshold. According to the fifth aspect, since the first valve and the second valve allow the pressure ratio to be finely adjusted to a desired value, it is possible to reduce loss due to refrigerant liquid exchange between the evaporator and the condenser.

In a sixth aspect of the present disclosure, for example, the controller in the refrigeration cycle apparatus according to one of the first to fifth aspects regards the turbo compressor as being in the surge state and executes the control of the switching mechanism, when a rotational speed of the turbo compressor is lower than or equal to a threshold rotational speed. According to the sixth aspect, it is possible to reliably prevent surge during a startup operation and a stop operation of the refrigeration cycle apparatus.

In a seventh aspect of the present disclosure, for example, the controller in the refrigeration cycle apparatus according to one of the first to sixth aspects regards the turbo compressor as being in the surge state and executes the control of the switching mechanism, when a rotational speed of the turbo compressor is higher than a threshold rotational speed, and a ratio of a discharge pressure of the turbo compressor to a suction pressure thereof is higher than or equal to a threshold pressure ratio. According to the seventh aspect, it is possible to more reliably prevent surge in the compressor.

In an eighth aspect of the present disclosure, for example, the refrigerant in the refrigeration cycle apparatus according to one of the first to seventh aspects is refrigerant whose saturation vapor pressure at ordinary temperature is a negative pressure. The technology disclosed herein is particularly useful for a refrigeration cycle apparatus using such a refrigerant.

A method according to a ninth aspect of the present disclosure is directed to a control method for a refrigeration cycle apparatus.

The refrigeration cycle apparatus includes:
an evaporator that retains liquid-phase refrigerant and that evaporates the liquid-phase refrigerant to generate gas-phase refrigerant;
a turbo compressor that compresses the gas-phase refrigerant generated in the evaporator;
a condenser that condenses the gas-phase refrigerant compressed by the turbo compressor to generate liquid-phase refrigerant and that retains the liquid-phase refrigerant generated in the condenser;
a first flow passage that is connected to a first part of the evaporator;
a second flow passage that is connected to a second part of the evaporator;
a third flow passage that is connected to a first part of the condenser;
a fourth flow passage that is connected to a second part of the condenser;
a switching mechanism that includes a valve and that switches a state of interconnection among the first flow passage, the second flow passage, the third flow passage, and the fourth flow passage to one connection state by use of the valve, the one connection state being selected from a plurality of connection states including a first connection state in which the first flow passage and the fourth flow passage are connected to each other, and the second flow passage and the third flow passage are connected to each other;
a first pump that is disposed on the second flow passage and that supplies the liquid-phase refrigerant retained in the evaporator toward the switching mechanism; and
a second pump that is disposed on the fourth flow passage and that supplies the liquid-phase refrigerant retained in the condenser toward the switching mechanism.

The control method includes controlling the switching mechanism to set the state of interconnection among the first flow passage, the second flow passage, the third flow passage, and the fourth flow passage to the first connection state when the turbo compressor is in a surge state or a choke state.

According to the ninth aspect, it is possible to obtain an advantage that is substantially the same as that in the first aspect.

Embodiments of the present disclosure will be described below with reference to the accompanying drawings. The present disclosure is not limited to the embodiments described below.

### (First Embodiment)

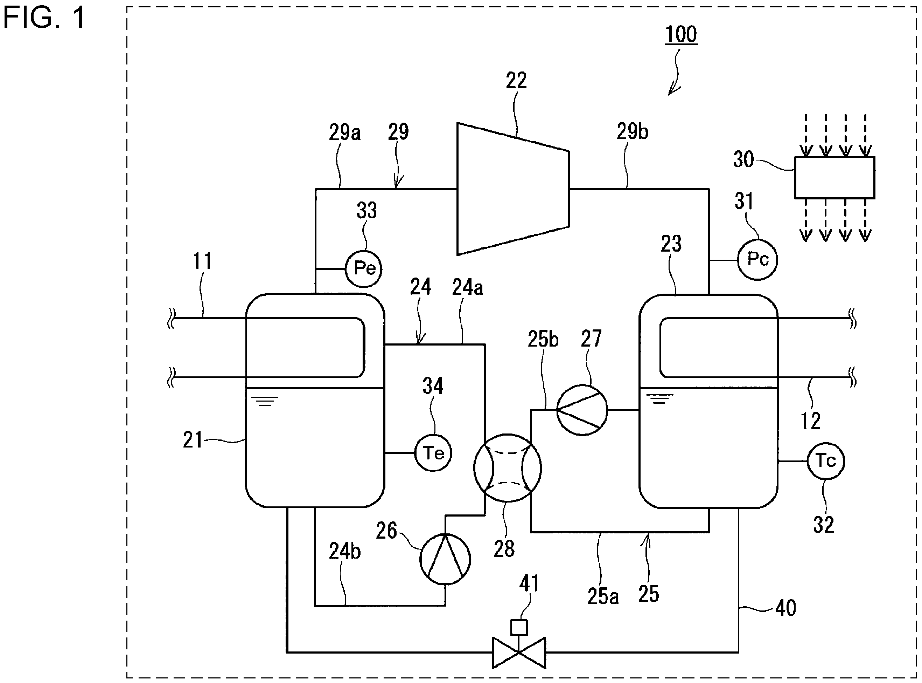

As illustrated in Fig. 1, a refrigeration cycle apparatus 100 in a first embodiment includes an evaporator 21, a compressor 22, and a condenser 23. The evaporator 21 retains refrigerant liquid (liquid-phase refrigerant) and evaporates the refrigerant liquid to generate refrigerant vapor (gas-phase refrigerant). The compressor 22 compresses the refrigerant vapor generated by the evaporator 21. The condenser 23 condenses the refrigerant vapor compressed by the compressor 22 to generate refrigerant liquid and retains the refrigerant liquid.

The compressor 22 is a turbo compressor, such as a centrifugal compressor or an axial compressor.

The refrigerant with which the refrigeration cycle apparatus 100 is filled contains, as a main component, a substance whose saturation vapor pressure at ordinary temperature (20°C±15°C in Japanese Industrial Standards (JIS) Z8703) is a negative pressure (i.e., in absolute pressure measure, a pressure lower than the atmospheric pressure). One example of such a refrigerant is a refrigerant that contains water, alcohol, or ether as a main component. The "main component" as used herein refers to the largest amount of contained component in mass ratio.

During operation of the refrigeration cycle apparatus 100, the pressure in the refrigeration cycle apparatus 100 is lower than the atmospheric pressure. The pressure at a suction port of the compressor 22 is, for example, in the range of 0.5 to 5 kPaA. The pressure at a discharge port of the compressor 22 is, for example, in the range of 5 to 15 kPaA.

The refrigeration cycle apparatus 100 further includes a vapor passage 29. The vapor passage 29 includes an upstream part 29a and a downstream part 29b. The upstream part 29a connects a vapor outlet (an outlet of the refrigerant vapor) of the evaporator 21 and the suction port of the compressor 22 to each other. The downstream part 29b connects the discharge port of the compressor 22 and a vapor inlet (an inlet of the refrigerant) of the condenser 23 to each other.

The refrigeration cycle apparatus 100 further includes a low-pressure circulation passage 24, a high-pressure circulation passage 25, a first pump 26, a second pump 27, and a switching mechanism 28. The low-pressure circulation passage 24 includes a first flow passage 24a and a second flow passage 24b. In the low-pressure circulation passage 24, the first flow passage 24a is a downstream part, and the second flow passage 24b is an upstream part. The high-pressure circulation passage 25 includes a third flow passage 25a and a fourth flow passage 25b. In the high-pressure circulation passage 25, the third flow passage 25a is a downstream part, and the fourth flow passage 25b is an upstream part.

Two opposite ends of the low-pressure circulation passage 24 are connected to the evaporator 21. The first flow passage 24a has a first end connected to a first part (an upper part) of the evaporator 21 and a second end connected to the switching mechanism 28. The second flow passage 24b has a first end connected to a second part (a lower part) of the evaporator 21 and a second end connected to the switching mechanism 28. The first part of the evaporator 21 is positioned above the liquid surface of the refrigerant liquid retained in the evaporator 21. The second part of the evaporator 21 is positioned below the liquid surface of the refrigerant liquid retained in the evaporator 21. According to such a positional relationship, the refrigerant liquid is reliably drawn into the low-pressure circulation passage 24.

When the first end of the first flow passage 24a is positioned above the liquid surface of the refrigerant liquid, the refrigerant liquid can be sprayed from the first flow passage 24a toward the internal space of the evaporator 21. In this case, evaporation of the refrigerant liquid can be promoted.

Two opposite ends of the high-pressure circulation passage 25 are connected to the condenser 23. The third flow passage 25a has a first end connected to a first part of the condenser 23 and a second end connected to the switching mechanism 28. The fourth flow passage 25b has a first end connected to a second part of the condenser 23 and a second end connected to the switching mechanism 28. The first part of the condenser 23 may be positioned above the liquid surface of the refrigerant liquid retained in the condenser 23 or may be positioned below the liquid surface of the refrigerant liquid. The second part of the condenser 23 is positioned below the liquid surface of the refrigerant liquid retained in the condenser 23. According to such a positional relationship, the refrigerant liquid is reliably drawn into the high-pressure circulation passage 25.

The first pump 26 is disposed on the second flow passage 24b of the low-pressure circulation passage 24. The first pump 26 supplies the refrigerant liquid retained in the evaporator 21 toward the switching mechanism 28. The second pump 27 is disposed on the fourth flow passage 25b of the high-pressure circulation passage 25. The second pump 27 supplies the refrigerant liquid retained in the condenser 23 toward the switching mechanism 28.

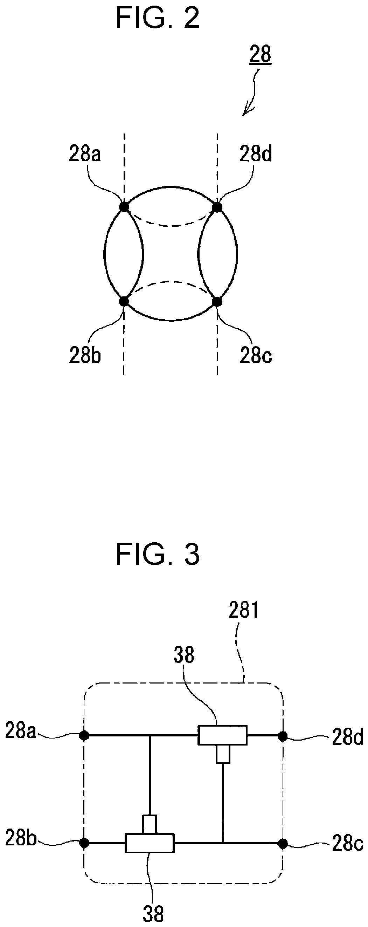

As illustrated in Fig. 2, the switching mechanism 28 includes four connection ports 28a to 28d. The first flow passage 24a, the second flow passage 24b, the third flow passage 25a, and the fourth flow passage 25b are connected to the connection port 28a, the connection port 28b, the connection port 28c, and the connection port 28d, respectively. In the present embodiment, the switching mechanism 28 is a four-way valve. The role of the switching mechanism 28 is to switch a state of interconnection among the first flow passage 24a, the second flow passage 24b, the third flow passage 25a, and the fourth flow passage 25b from one connection state selected from a plurality of connection states to another connection state selected therefrom. The plurality of connection states includes a first connection state indicated by dashed lines and a second connection state indicated by solid lines. The first connection state is a state in which the first flow passage 24a and the fourth flow passage 25b are connected to each other and the second flow passage 24b and the third flow passage 25a are connected to each other. The second connection state is a state in which the first flow passage 24a and the second flow passage 24b are connected to each other and the third flow passage 25a and the fourth flow passage 25b are connected to each other.

When the state of interconnection among the first to fourth flow passages 24a, 24b, 25a, and 25b is the first connection state, and the first pump 26 and the second pump 27 are driven, the refrigerant liquid in the evaporator 21 and the refrigerant liquid in the condenser 23 are exchanged therebetween. More specifically, owing to operation of the first pump 26, the refrigerant liquid retained in the evaporator 21 is transferred to the condenser 23 through the second flow passage 24b, the switching mechanism 28, and the third flow passage 25a. Owing to operation of the second pump 27, the refrigerant liquid retained in the condenser 23 is transferred to the evaporator 21 through the fourth flow passage 25b, the switching mechanism 28, and the first flow passage 24a. That is, low-temperature refrigerant liquid and high-temperature refrigerant liquid are mixed in each of the evaporator 21 and the condenser 23.

When the state of interconnection among the first to fourth flow passages 24a, 24b, 25a, and 25b is the second connection state, and the first pump 26 is driven, the refrigerant liquid retained in the evaporator 21 circulates through the low-pressure circulation passage 24. As a result, the evaporation of the refrigerant liquid is promoted. In the second connection state, the second pump 27 may remain stopped or may be driven.

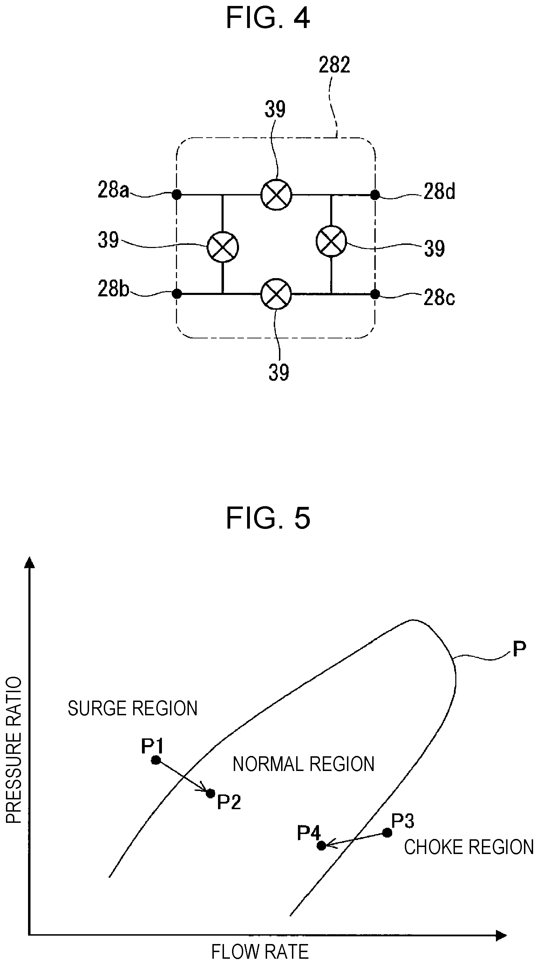

The switching mechanism 28 is not limited to a four-way valve. Fig. 3 illustrates a switching mechanism 281 according to a modification. Fig. 4 illustrates a switching mechanism 282 according to another modification. The switching mechanism 281 illustrated in Fig. 3 includes two three-way valves 38. The switching mechanism 282 illustrated in Fig. 4 includes four valves 39. That is, the switching mechanism in the present disclosure includes at least one valve, and by use of the at least one values, the switching mechanism has an ability of switching the state of interconnection among the first to fourth flow passages 24a, 24b, 25a, and 25b to one connection state selected from the plurality of connection states.

In the switching mechanism 282 illustrated in Fig. 4, the four valves 39 are, for example, open/close valves. When the valves 39 are open/close valves, the switching mechanism 282 can be constructed at low cost.

The refrigeration cycle apparatus 100 further includes a return passage 40. A flow-rate adjusting valve 41 is disposed on the return passage 40. The return passage 40 connects the condenser 23 and the evaporator 21 to each other. A starting end of the return passage 40 is connected to a lower part of the condenser 23. A terminating end of the return passage 40 is connected to a lower part or an upper part of the evaporator 21. Since the refrigerant liquid is introduced from the condenser 23 into the evaporator 21 through the return passage 40, it is not necessary to complementarily supply refrigerant liquid to the evaporator 21. The flow rate of the refrigerant liquid in the return passage 40 can be adjusted through control of the flow-rate adjusting valve 41. The flow-rate adjusting valve 41 may also be eliminated.

The refrigeration cycle apparatus 100 further includes a heat absorption circuit 11 and a heat release circuit 12.

The heat absorption circuit 11 is a circuit for using refrigerant liquid cooled in the evaporator 21 and has necessary equipment, such as a pump and an indoor heat exchanger. Part of the heat absorption circuit 11 is positioned inside the evaporator 21. Inside the evaporator 21, part of the heat absorption circuit 11 may be positioned above the liquid surface of the refrigerant liquid or may be positioned below the liquid surface of the refrigerant liquid. The heat absorption circuit 11 is filled with a first liquid-phase heat medium, such as water or brine.

The refrigerant liquid is sprayed from an upper part of the evaporator 21 through the low-pressure circulation passage 24 and contacts a member (a pipe) that is included in the heat absorption circuit 11. Heat is exchanged between the refrigerant liquid and the heat medium in the heat absorption circuit 11, so that the refrigerant liquid evaporates. The heat medium in the heat absorption circuit 11 is cooled by latent heat of the evaporation of the refrigerant liquid. For example, when the refrigeration cycle apparatus 100 is an air conditioning apparatus for performing cooling in a room, the heat medium in the heat absorption circuit 11 cools air in the room.

The heat release circuit 12 is a circuit used for releasing heat from the refrigerant in the condenser 23 and has necessary equipment, such as a pump and a cooling tower. Part of the heat release circuit 12 is positioned inside the condenser 23. Inside the condenser 23, part of the heat release circuit 12 is positioned above the liquid surface of the refrigerant liquid. The heat release circuit 12 is filled with a second liquid-phase heat medium, such as water or brine.

High-temperature refrigerant vapor discharged from the compressor 22 contacts, inside the condenser 23, a member (a pipe) included in the heat release circuit 12. Heat is exchanged between the refrigerant vapor and the heat medium in the heat release circuit 12, so that the refrigerant vapor condenses. The heat medium in the heat release circuit 12 is heated by latent heat of the condensation of the refrigerant vapor. The heat medium heated by the refrigerant vapor is cooled by, for example, outside air or coolant water in the cooling tower (not illustrated) in the heat release circuit 12.

The evaporator 21 is formed with, for example, a heat-insulating or pressure-resisting container. The evaporator 21 retains the refrigerant liquid and evaporates the refrigerant liquid therein. That is, the refrigerant liquid heated through absorption of heat from the heat absorption circuit 11 boils and evaporates in the evaporator 21. In the present embodiment, the refrigerant liquid retained in the evaporator 21 indirectly contacts the heat medium that circulates through the heat absorption circuit 11. Part of the refrigerant liquid retained in the evaporator 21 is heated by the heat medium in the heat absorption circuit 11 and is used for heating the refrigerant liquid in a saturation state.

The condenser 23 is formed with, for example, a heat-insulating or pressure-resisting container. The condenser 23 condensates the refrigerant vapor to generate refrigerant liquid and retains the generated refrigerant liquid. In the present embodiment, refrigerant vapor in an overheated state condenses by indirectly contacting the heat medium cooled through heat release to the external environment. The refrigerant vapor is cooled by the heat medium in the heat release circuit 12 and condenses.

The refrigerant liquid retained in the evaporator 21 may be circulated to the heat absorption circuit 11. The refrigerant liquid retained in the condenser 23 may also be circulated to the heat release circuit 12.

The refrigeration cycle apparatus 100 further includes a first pressure sensor 31, a second pressure sensor 33, a first temperature sensor 32, and a second temperature sensor 34. The first pressure sensor 31 is disposed, for example, at the downstream part 29b of the vapor passage 29. The second pressure sensor 33 is disposed, for example, at the upstream part 29a of the vapor passage 29. The first pressure sensor 31 detects a pressure (a discharge pressure) of the refrigerant vapor at the discharge port of the compressor 22. The second pressure sensor 33 detects a pressure (a suction pressure) of the refrigerant vapor at the suction port of the compressor 22. The pressure ratio in the refrigeration cycle apparatus 100 can be calculated based on results of the detection performed by the first pressure sensor 31 and the second pressure sensor 33. The positions of the pressure sensors 31 and 33 are not particularly limiting, as long as they can detect the discharge pressure and the suction pressure. The first pressure sensor 31 may be disposed inside the condenser 23. The second pressure sensor 33 may be disposed inside the evaporator 21.

The first temperature sensor 32 may be disposed, for example, inside the condenser 23. More specifically, the first temperature sensor 32 is positioned below the liquid surface of the refrigerant liquid retained in the condenser 23. The second temperature sensor 34 is disposed, for example, inside the evaporator 21. More specifically, the second temperature sensor 34 is positioned below the liquid surface of the refrigerant liquid retained in the evaporator 21. The first temperature sensor 32 detects a temperature (a condensation temperature) of the refrigerant liquid retained in the condenser 23. The second temperature sensor 34 detects a temperature (an evaporation temperature) of the refrigerant liquid retained in the evaporator 21. The positions of the temperature sensors 32 and 34 are not particularly limiting, as long as they can detect the condensation temperature and the evaporation temperature. The first temperature sensor 32 may be disposed on the fourth flow passage 25b of the high-pressure circulation passage 25 or may be disposed between the condenser 23 and the flow-rate adjusting valve 41 and on the return passage 40. The second temperature sensor 34 may be disposed on the second flow passage 24b of the low-pressure circulation passage 24.

Since the discharge pressure is determined based on the condensation temperature, and the suction pressure is determined based on the evaporation temperature, the pressure ratio in the refrigeration cycle apparatus 100 can be calculated based on results of the detection performed by the first temperature sensor 32 and the second temperature sensor 34. That is, the functions of the pressure sensors 31 and 33 can instead be achieved by the temperature sensors 32 and 34.

The refrigeration cycle apparatus 100 further includes a controller 30. The controller 30 controls the compressor 22, the first pump 26, the second pump 27, the switching mechanism 28, and the flow-rate adjusting valve 41. The controller 30 can be implemented by a digital signal processor (DSP) including an analog-to-digital (A/D) conversion circuit, an input/output circuit, a computational-operation circuit, a storage device, and so on. The controller 30 stores therein a program for appropriately operating the refrigeration cycle apparatus 100. The sensors 31 to 34 are connected to the controller 30. The controller 30 obtains sensor signals output from the sensors 31 to 34. Based on the obtained sensor signals, the controller 30 controls the switching mechanism 28.

The controller 30 obtains sensor signals from the pressure sensors 31 and 33 and determines the pressure ratio ("discharge pressure"/"suction pressure") in the refrigeration cycle apparatus 100 on the basis of the obtained sensor signals. Alternatively, the controller 30 obtains sensor signals from the temperature sensors 32 and 34 and determines the pressure ratio in the refrigeration cycle apparatus 100 on the basis of the obtained sensor signals. The controller 30 further determines the operating state of the compressor 22 on the basis of the determined pressure ratio and a flow rate (a mass flow rate) of the refrigerant in the compressor 22. In other words, the controller 30 determines in which of a surge region, a normal region, and a choke region the combination of the pressure ratio and the flow rate of the refrigerant lies. The flow rate of the refrigerant can be estimated from the rotational speed of the compressor 22. In general, when the turbo compressor is operated with a sufficiently high rotational speed, the flow rate is generally proportional to the rotational speed. The "sufficiently high rotational speed" depends on design of the turbo compressor.

When the pressure ratio ("discharge pressure/"suction pressure") in the system exceeds an allowable value during operation of the turbo compressor with a certain rotational speed, surge occurs. When the pressure ratio ("discharge pressure"/"suction pressure") in the system during operation of the turbo compressor with a certain rotational speed falls below the allowable value, choke (flow block) occurs. That is, there is a certain constraint between the rotational speed in the turbo compressor and the pressure ratio in the system, and when the turbo compressor is operated beyond the range of the constraint, surge or choke occurs.

Fig. 5 illustrates characteristics of the compressor 22. In accordance with the flow rate of the refrigerant in the compressor 22 and the pressure ratio in the refrigeration cycle apparatus 100, the compressor 22 is operated in any of a normal region surrounded by a curve P, a surge region outside the curve P, and a choke region outside the curve P. The graph illustrated in Fig. 5 is stored, for example, in a memory for the controller 30 in a tabular form. The controller 30 determines in which of the surge region, the normal region, and the choke region the combination of the flow rate and the pressure ratio lies.

When the rotational speed of the compressor 22 is higher than a predetermined threshold rotational speed, the flow rate of the refrigerant depends on the rotational speed of the compressor 22. Thus, it is possible to determine whether or not the compressor 22 is in the surge state by using the rotational speed of the compressor 22. Specifically, the flow rate of the refrigerant depends on the suction pressure and the rotational speed of the compressor 22. The state of the compressor 22 can be identified based on the suction pressure, the discharge pressure, and the rotational speed the compressor 22. The "threshold rotational speed" is a design value for the compressor 22.

When the compressor 22 is a turbo compressor, and the rotational speed is lower than or equal to the threshold rotational speed (e.g., 20,000 revolutions per minute (rpm)), a sufficient amount of refrigerant does not flow. This phenomenon is significant when the pressure inside the refrigeration cycle apparatus 100 is lower than the atmospheric pressure. Thus, when the rotational speed of the compressor 22 is lower than or equal to the threshold rotational speed, the compressor 22 can be regarded as being in the surge state. This makes it possible to reliably prevent surge during a startup operation and a stop operation of the refrigeration cycle apparatus 100.

Next, a description will be given of the operation of the refrigeration cycle apparatus 100.

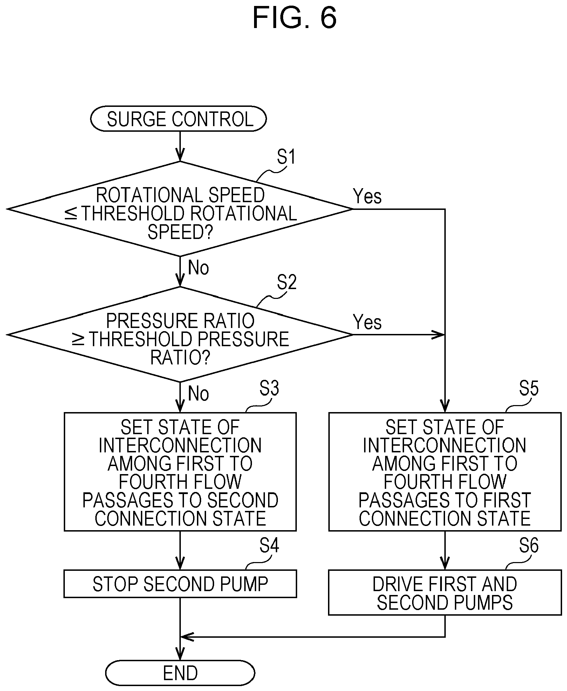

After the refrigeration cycle apparatus 100 is started up, the controller 30 periodically executes surge control illustrated in Fig. 6. In step S1, a determination is made as to whether or not the present rotational speed of the compressor 22 is lower than or equal to a threshold rotational speed (e.g., 20,000 rpm). If the rotational speed of the compressor 22 is lower than or equal to the threshold rotational speed, the compressor 22 is regarded as being in the surge state, and processes in steps S5 and S6 are executed. Such processing makes it possible to reliably prevent surge during a startup operation and a stop operation of the refrigeration cycle apparatus 100. When the controller 30 is a controller for controlling a motor for the compressor 22, the rotational speed of the compressor 22 is a value that is stored in the memory for the controller 30 at all times.

If the rotational speed of the compressor 22 is higher than the threshold rotational speed, in step S2, a determination is made as to whether or not the present pressure ratio in the refrigeration cycle apparatus 100 is higher than or equal to a threshold pressure ratio. If the pressure ratio is higher than or equal to the threshold pressure ratio, the compressor 22 is regarded as being in the surge state, and the processes in steps S5 and S6 are executed. Such processing makes it possible to more reliably prevent surge in the compressor 22. The pressure ratio can be determined from results of the detection performed by the pressure sensors 31 and 33. As can be understood from Fig. 5, the "threshold pressure ratio" is specified depending on the rotational speed (flow rate) of the compressor 22. In addition, the graph in Fig. 5 may be prepared according to the evaporation temperature. That is, the threshold pressure ratio may be specified depending on the rotational speed of the compressor 22 and the evaporation temperature.

In short, in steps S1 and S2, a determination is made as to whether or not the combination of the rotational speed and the pressure ratio is in the surge region. The controller 30 may also have a table in which the characteristics of the compressor 22 are indicated. By referring to the table, it is possible to determine whether or not the combination of the rotational speed and the pressure ratio is included in the surge region.

When the compressor 22 is in the surge state, in step S5, the state of interconnection among the first to fourth flow passages 24a, 24b, 25a, and 25b is set to the first connection state. More specifically, when the compressor 22 is in the surge state, the switching mechanism 28 (the four-way valve 28) is controlled to switch the state of interconnection among the first to fourth flow passages 24a, 24b, 25a, and 25b from the second connection state to the first connection state. In the first connection state (the state indicated by dashed lines in Fig. 1), the first flow passage 24a and the fourth flow passage 25b are connected to each other, and the second flow passage 24b and the third flow passage 25a are connected to each other. In addition, in step S6, the first pump 26 and the second pump 27 are driven. When the first pump 26 and the second pump 27 are driven, the refrigerant liquid retained in the evaporator 21 and the refrigerant liquid retained in the condenser 23 are exchanged therebetween. When the refrigerant liquid retained in the evaporator 21 and the refrigerant liquid retained in the condenser 23 are exchanged therebetween, the difference between the temperature of the refrigerant liquid in the evaporator 21 and the temperature of the refrigerant liquid in the condenser 23 decreases. In other words, the difference between the evaporation temperature and the condensation temperature decreases. When the difference between the evaporation temperature and the condensation temperature decreases, the pressure ratio also decreases. As a result, the operating state of the compressor 22 changes from state P1 in the surge region to state P2 in the normal region (see Fig. 5). The order of steps S5 and S6 may be reversed.

On the other hand, if the compressor 22 is not in the surge state, in step S3, the state of interconnection among the first to fourth flow passages 24a, 24b, 25a, and 25b is set to the second connection state. That is, when the compressor 22 is in the normal state, the switching mechanism 28 (the four-way valve 28) is controlled to switch the state of interconnection among the first to fourth flow passages 24a, 24b, 25a, and 25b from the first connection state to the second connection state. Alternatively, the state of interconnection among the first to fourth flow passages 24a, 24b, 25a, and 25b is maintained in the second connection state. In the second connection state (the state indicated by solid lines in Fig. 1), the first flow passage 24a and the second flow passage 24b are connected to each other, and the third flow passage 25a and the fourth flow passage 25b are connected to each other. The second connection state is a connection state during normal operation of the refrigeration cycle apparatus 100. Upon drive of the first pump 26 when the state of interconnection among the first to fourth flow passages 24a, 24b, 25a, and 25b is the second connection state, the refrigerant liquid retained in the evaporator 21 circulates through the low-pressure circulation passage 24. This makes it possible to promote evaporation of the refrigerant liquid. In the second connection state, the second pump 27 may be stopped (step S4) or may be driven.

According to the present embodiment, when the compressor 22 is in the surge state, the state of interconnection among the first to fourth flow passages 24a, 24b, 25a, and 25b is set to the first connection state. The refrigerant liquid retained in the evaporator 21 and the refrigerant liquid retained in the condenser 23 are mixed in each of the evaporator 21 and the condenser 23. The temperature of the refrigerant liquid retained in the evaporator 21 increases, and the pressure in the evaporator 21 also increases. The temperature of the refrigerant liquid retained in the condenser 23 decreases, and the pressure in the condenser 23 also decreases. In the refrigeration cycle apparatus 100 using the low-pressure refrigerant, the pressure ratio can be reduced to an allowable value, thus making it possible to prevent surge in the compressor 22.

According to the present embodiment, it is possible to execute a non-steady-state operation, such as a startup operation and a partial load operation, while preventing surge in the compressor 22. It is also possible to minimize a decline in the performance of the refrigeration cycle apparatus 100. In addition, the prevention of the surge increases the reliability of the compressor 22 and also increases the reliability of the refrigeration cycle apparatus 100.

When the compressor 22 is in the choke state (i.e., when the combination of the rotational speed and the pressure ratio lies in the choke region), the state of interconnection among the first to fourth flow passages 24a, 24b, 25a, and 25b is also set to the first connection state. This reduces the pressure ratio and reduces the flow rate of the refrigerant. The operating state of the compressor 22 changes from, for example, state P3 in the choke region to state P4 in the normal region (see Fig. 5).

### (Second Embodiment)

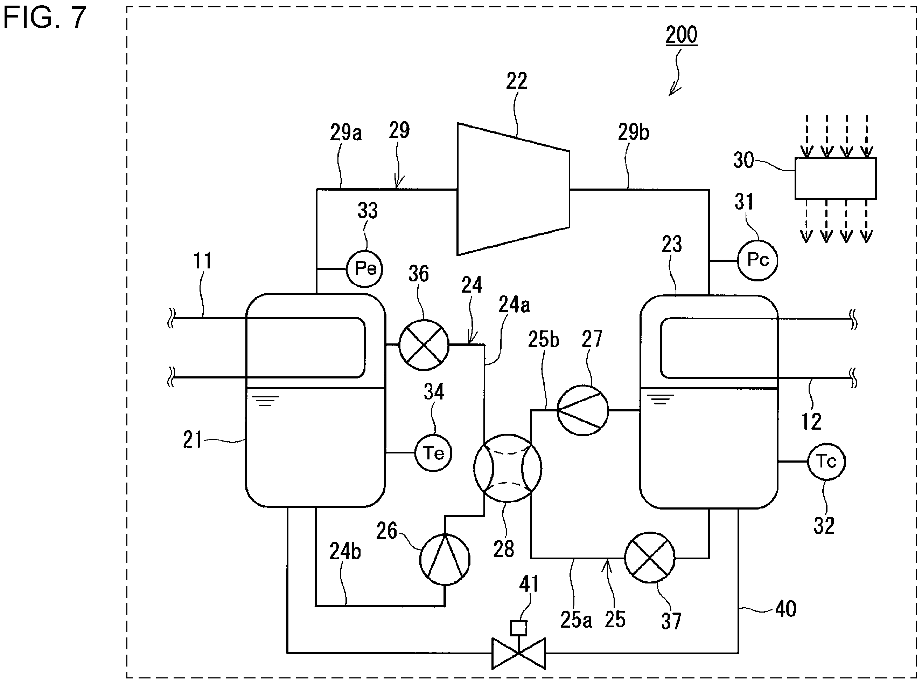

As illustrated in Fig. 7, a refrigeration cycle apparatus 200 according to a second embodiment includes a first valve 36 and a second valve 37. The structure of the refrigeration cycle apparatus 200 is substantially the same as the structure of the refrigeration cycle apparatus 100 in the first embodiment, except for the first valve 36 and the second valve 37. Elements that are common to the refrigeration cycle apparatus 100 in the first embodiment and the refrigeration cycle apparatus 200 in the present embodiment are denoted by the same reference numerals, and descriptions thereof may be omitted hereinafter. That, the descriptions of the respective embodiments can be mutually applied thereto, unless technically inconsistent. In addition, the individual embodiments may be combined together, unless technically inconsistent.

The first valve 36 is disposed on the first flow passage 24a of the low-pressure circulation passage 24. The first valve 36 is a flow-rate adjusting valve. The second valve 37 is disposed on the third flow passage 25a of the high-pressure circulation passage 25. The second valve 37 is a flow-rate adjusting valve. According to the present embodiment, it is possible to adjust the flow rate of the refrigerant liquid exchanged between the evaporator 21 and the condenser 23.

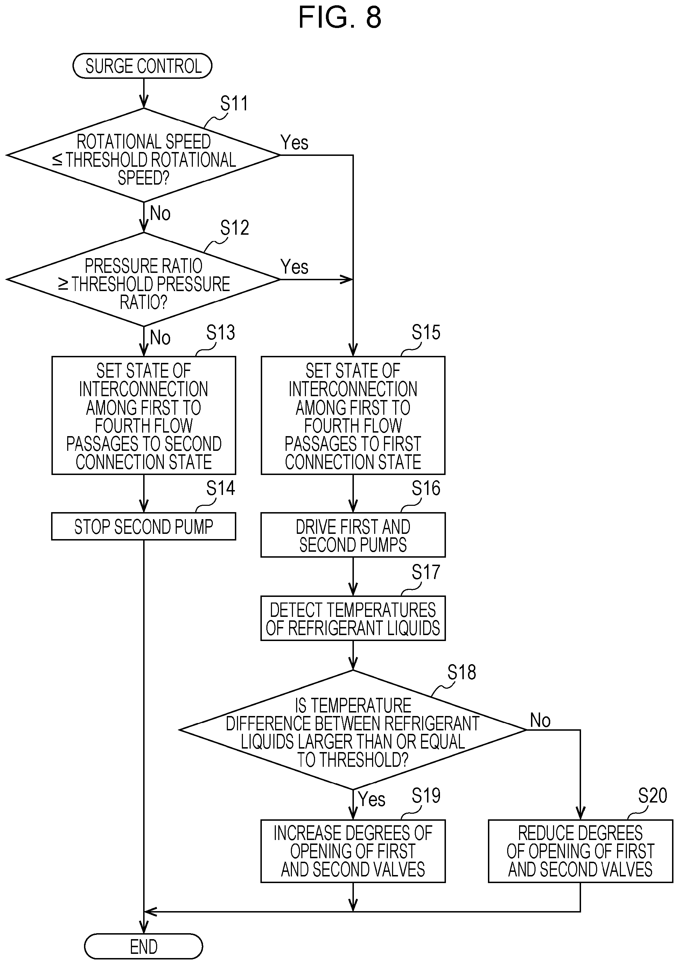

After the refrigeration cycle apparatus 200 is started up, the controller 30 periodically executes the surge control illustrated in Fig. 8. Steps S11 to S16 correspond to steps S1 to S6 described above with reference to Fig. 6.

In step S17, the temperature of the refrigerant liquid retained in the evaporator 21 and the temperature of the refrigerant liquid retained in the condenser 23 are detected. These temperatures can be determined from detection signals from the temperature sensors 32 and 34. Next, in step S18, a determination is made as to whether or not the difference between the temperature of the refrigerant liquid retained in the condenser 23 and the temperature of the refrigerant liquid retained in the evaporator 21 is larger than or equal to a threshold. If the temperature difference is larger than or equal to the threshold, in step S19, the first valve 36 is controlled to increase the degree of opening of the first valve 36, and the second valve 37 is controlled to increase the degree of opening of the second valve 37. For example, the degrees of the first valve 36 and the second valve 37 are increased step by step. As a result, the flow rate of the refrigerant liquid supplied from the evaporator 21 to the condenser 23 and the flow rate of the refrigerant liquid supplied from the condenser 23 to the evaporator 21 increase in a stepwise manner, so that the pressure ratio in the refrigeration cycle apparatus 200 decreases. Thus, the flow rate of the refrigerant liquid supplied from the evaporator 21 to the condenser 23 and the flow rate of the refrigerant liquid supplied from the condenser 23 to the evaporator 21 decrease in a stepwise manner.

The present embodiment provides substantially the same advantages as those in the first embodiment. In addition, according to the present embodiment, since the pressure ratio can be finely adjusted to a desired value through use of the first valve 36 and the second valve 37, it is possible to reduce loss due to the refrigerant liquid exchange between the evaporator 21 and the condenser 23.

### (Modifications, etc.)

The refrigeration cycle apparatus in the present disclosure may have a plurality of compressors. The plurality of compressors includes at least one turbo compressor. For example, it is desirable to use a centrifugal compressor with a single axis and two stages. When the refrigeration cycle apparatus has a plurality of compressors, an inter-stage cooler for cooling refrigerant vapor may be provided on a passage that connects a discharge port of a first-stage compressor and a suction port of a second-stage compressor to each other. The inter-stage cooler can be configured using a heat exchanger, such as a shell-tube heat exchanger or a fin-tube heat exchanger. The inter-stage cooler may be configured so as to cool refrigerant vapor by using a heat medium (e.g., air or water) supplied from outside of the refrigeration cycle apparatus or may be configurated so as to cool refrigerant vapor by using a refrigerant liquid.

The technology disclosed herein is applicable to air conditioning apparatuses, chillers, heat accumulation apparatuses, and so on.

## Claims

1. A refrigeration cycle apparatus (100, 200) comprising:
an evaporator (21) that retains liquid-phase refrigerant and that evaporates the liquid-phase refrigerant to generate gas-phase refrigerant;
a turbo compressor (22) that compresses the gas-phase refrigerant generated in the evaporator (21);
a condenser (23) that condenses the gas-phase refrigerant compressed by the turbo compressor (22) to generate liquid-phase refrigerant and that retains the liquid-phase refrigerant generated in the condenser (23);
a first flow passage (24a) that is connected to a first part of the evaporator (21);
a second flow passage (24b) that is connected to a second part of the evaporator (21);
a third flow passage (25a) that is connected to a first part of the condenser (23);
a fourth flow passage (25b) that is connected to a second part of the condenser (23);
a switching mechanism (28, 281, 282) that includes a valve and that switches a state of interconnection among the first flow passage (24a), the second flow passage (24b), the third flow passage (25a), and the fourth flow passage (25b) to one connection state by use of the valve, the one connection state being selected from a plurality of connection states including a first connection state in which the first flow passage (24a) and the fourth flow passage (25b) are connected to each other, and the second flow passage (24b) and the third flow passage (25a) are connected to each other;
a first pump (26) that is disposed on the second flow passage (24b) and that supplies the liquid-phase refrigerant retained in the evaporator (21) toward the switching mechanism (28, 281, 282); and
a second pump (27) that is disposed on the fourth flow passage (25b) and that supplies the liquid-phase refrigerant retained in the condenser (23) toward the switching mechanism (28, 281, 282),
**characterized in that**
the refrigeration cycle apparatus (100, 200) further comprises:
a controller (30) that controls the switching mechanism (28, 281, 282) to set the state of interconnection among the first flow passage (24a), the second flow passage (24b), the third flow passage (25a), and the fourth flow passage (25b) to the first connection state when the turbo compressor (22) is in a surge state or a choke state.

2. The refrigeration cycle apparatus (100, 200) according to claim 1,
wherein the first part of the evaporator (21) is positioned above a liquid surface of the liquid-phase refrigerant retained in the evaporator (21);
the second part of the evaporator (21) is positioned below the liquid surface of the liquid-phase refrigerant retained in the evaporator (21); and
the plurality of connection states further includes a second connection state in which the first flow passage (24a) and the second flow passage (24b) are connected to each other, and the third flow passage (25a) and the fourth flow passage (25b) are connected to each other.

3. The refrigeration cycle apparatus (100, 200) according to claim 2,
wherein, when the turbo compressor (22) is in the surge state or the choke state, the controller (30) controls the switching mechanism (28, 281, 282) to switch the state of interconnection among the first flow passage (24a), the second flow passage (24b), the third flow passage (25a), and the fourth flow passage (25b) from the second connection state to the first connection state.

4. The refrigeration cycle apparatus (200) according to one of claims 1 to 3, further comprising:
a first valve (36) that is disposed on the first flow passage (24a) and that has an adjustable degree of opening; and
a second valve (37) that is disposed on the third flow passage (25a) and that has an adjustable degree of opening.

5. The refrigeration cycle apparatus (100, 200) according to claim 4,
wherein, when the state of interconnection among the first flow passage (24a), the second flow passage (24b), the third flow passage (25a), and the fourth flow passage (25b) is in the first connection state, and a difference between a temperature of the liquid-phase refrigerant retained in the condenser (23) and a temperature of the liquid-phase refrigerant retained in the evaporator (21) is larger than or equal to a threshold, the controller (30) controls the first valve (36) to increase the degree of opening of the first valve (36) and controls the second valve (37) to increase the degree of opening of the second valve (37).

6. The refrigeration cycle apparatus (100, 200) according to one of claims 1 to 5,
wherein, when a rotational speed of the turbo compressor (22) is lower than or equal to a threshold rotational speed, the controller (30) regards the turbo compressor (22) as being in the surge state and executes the control of the switching mechanism (28, 281, 282).

7. The refrigeration cycle apparatus (100, 200) according to one of claims 1 to 6,
wherein, when a rotational speed of the turbo compressor (22) is higher than a threshold rotational speed, and a ratio of a discharge pressure of the turbo compressor (22) to a suction pressure thereof is higher than or equal to a threshold pressure ratio, the controller (30) regards the turbo compressor (22) as being in the surge state and executes the control of the switching mechanism (28, 281, 282).

8. A refrigeration cycle apparatus (100, 200) according to one of claims 1 to 7,
wherein the refrigerant comprises refrigerant whose saturation vapor pressure at ordinary temperature is a negative pressure.

9. A control method for a refrigeration cycle apparatus (100, 200) including:
an evaporator (21) that retains liquid-phase refrigerant and that evaporates the liquid-phase refrigerant to generate gas-phase refrigerant;
a turbo compressor (22) that compresses the gas-phase refrigerant generated in the evaporator (21);
a condenser (23) that condenses the gas-phase refrigerant compressed by the turbo compressor (22) to generate liquid-phase refrigerant and that retains the liquid-phase refrigerant generated in the condenser (23);
a first flow passage (24a) that is connected to a first part of the evaporator (21);
a second flow passage (24b) that is connected to a second part of the evaporator (21);
a third flow passage (25a) that is connected to a first part of the condenser (23);
a fourth flow passage (25b) that is connected to a second part of the condenser (23);
a switching mechanism (28, 281, 282) that includes a valve and that switches a state of interconnection among the first flow passage (24a), the second flow passage (24b), the third flow passage (25a), and the fourth flow passage (25b) to one connection state by use of the valve, the one connection state being selected from a plurality of connection states including a first connection state in which the first flow passage (24a) and the fourth flow passage (25b) are connected to each other, and the second flow passage (24b) and the third flow passage (25a) are connected to each other;
a first pump (26) that is disposed on the second flow passage (24b) and that supplies the liquid-phase refrigerant retained in the evaporator (21) toward the switching mechanism (28, 281, 282); and
a second pump (27) that is disposed on the fourth flow passage (25b) and that supplies the liquid-phase refrigerant retained in the condenser (23) toward the switching mechanism (28, 281, 282),
**characterized in that**
the control method comprises controlling the switching mechanism (28, 281, 282) to set the state of interconnection among the first flow passage (24a), the second flow passage (24b), the third flow passage (25a), and the fourth flow passage (25b) to the first connection state when the turbo compressor (22) is in a surge state or a choke state.

## Patentansprüche

1. Kältekreislaufvorrichtung (100, 200), umfassend:
einen Verdampfer (21), der flüssigphasiges Kältemittel zurückhält und das flüssigphasige Kältemittel verdampft, um gasphasiges Kältemittel zu erzeugen;
einen Turbokompressor (22), der das im Verdampfer (21) erzeugte gasphasige Kältemittel verdichtet;
einen Verflüssiger (23), der das vom Turbokompressor (22) verdichtete gasphasige Kältemittel verflüssigt, um flüssigphasiges Kältemittel zu erzeugen, und der das im Verflüssiger (23) erzeugte flüssigphasige Kältemittel zurückhält;
einen ersten Strömungskanal (24a), der mit einem ersten Teil des Verdampfers (21) verbunden ist;
einen zweiten Strömungskanal (24b), der mit einem zweiten Teil des Verdampfers (21) verbunden ist;
einen dritten Strömungskanal (25a), der mit einem ersten Teil des Verflüssigers (23) verbunden ist;
einen vierten Strömungskanal (25b), der mit einem zweiten Teil des Verflüssigers (23) verbunden ist;
einen Umschaltmechanismus (28, 281, 282), der ein Ventil umfasst und der unter Verwendung des Ventils einen Verschaltungszustand zwischen dem ersten Strömungskanal (24a), dem zweiten Strömungskanal (24b), dem dritten Strömungskanal (25a) und dem vierten Strömungskanal (25b) zu einem Verbindungszustand umschaltet, wobei der eine Verbindungszustand aus einer Vielzahl von Verbindungszuständen ausgewählt wird, die einen ersten Verbindungszustand umfasst, in dem der erste Strömungskanal (24a) und der vierte Strömungskanal (25b) miteinander verbunden sind und der zweite Strömungskanal (24b) und der dritte Strömungskanal (25a) miteinander verbunden sind;
eine erste Pumpe (26), die auf dem zweiten Strömungskanal (24b) angeordnet ist und das in dem Verdampfer (21) zurückgehaltene flüssigphasige Kältemittel zum Umschaltmechanismus (28, 281, 282) fördert; und
eine zweite Pumpe (27), die auf dem vierten Strömungskanal (25b) angeordnet ist und das in dem Verflüssiger (23) zurückgehaltene flüssigphasige Kältemittel zum Umschaltmechanismus (28, 281, 282) fördert,
**dadurch gekennzeichnet, dass**
die Kältekreislaufvorrichtung (100, 200) ferner umfasst:
eine Steuerung (30), die den Umschaltmechanismus (28, 281, 282) steuert, um den Verschaltungszustand zwischen dem ersten Strömungskanal (24a), dem zweiten Strömungskanal (24b), dem dritten Strömungskanal (25a) und dem vierten Strömungskanal (25b) auf den ersten Verbindungszustand einzustellen, wenn sich der Turbokompressor (22) in einem Pump-Zustand oder einem Sperr-Zustand befindet.

2. Kältekreislaufvorrichtung (100, 200) nach Anspruch 1,
wobei der erste Teil des Verdampfers (21) oberhalb einer Flüssigkeitsoberfläche des in dem Verdampfer (21) zurückgehaltenen flüssigphasigen Kältemittels positioniert ist;
der zweite Teil des Verdampfers (21) unterhalb der Flüssigkeitsoberfläche des in dem Verdampfer (21) zurückgehaltenen flüssigphasigen Kältemittels positioniert ist; und
die Vielzahl von Verbindungszuständen ferner einen zweiten Verbindungszustand umfasst, in dem der erste Strömungskanal (24a) und der zweite Strömungskanal (24b) miteinander verbunden sind und der dritte Strömungskanal (25a) und der vierte Strömungskanal (25b) miteinander verbunden sind.

3. Kältekreislaufvorrichtung (100, 200) nach Anspruch 2,
wobei die Steuerung (30), wenn sich der Turbokompressor (22) in dem Pump-Zustand oder dem Sperr-Zustand befindet, den Umschaltmechanismus (28, 281, 282) steuert, um den Verschaltungszustand zwischen dem ersten Strömungskanal (24a), dem zweiten Strömungskanal (24b), dem dritten Strömungskanal (25a) und dem vierten Strömungskanal (25b) vom zweiten Verbindungszustand zum ersten Verbindungszustand umzuschalten.

4. Kältekreislaufvorrichtung (200) nach einem der Ansprüche 1 bis 3, ferner umfassend:
ein erstes Ventil (36), das auf dem ersten Strömungskanal (24a) angeordnet ist und einen einstellbaren Öffnungsgrad aufweist; und
ein zweites Ventil (37), das auf dem dritten Strömungskanal (25a) angeordnet ist und einen einstellbaren Öffnungsgrad aufweist.

5. Kältekreislaufvorrichtung (100, 200) nach Anspruch 4,
wobei die Steuerung (30), wenn sich der Verschaltungszustand zwischen dem ersten Strömungskanal (24a), dem zweiten Strömungskanal (24b), dem dritten Strömungskanal (25a) und dem vierten Strömungskanal (25b) im ersten Verbindungszustand befindet und eine Differenz zwischen einer Temperatur des in dem Verflüssiger (23) zurückgehaltenen flüssigphasigen Kältemittels und einer Temperatur des in dem Verdampfer (21) zurückgehaltenen flüssigphasigen Kältemittels größer oder gleich einem Schwellenwert ist, das erste Ventil (36) steuert, um den Öffnungsgrad des ersten Ventils (36) zu erhöhen, und das zweite Ventil (37) steuert, um den Öffnungsgrad des zweiten Ventils (37) zu erhöhen.

6. Kältekreislaufvorrichtung (100, 200) nach einem der Ansprüche 1 bis 5,
wobei die Steuerung (30), wenn eine Drehzahl des Turbokompressors (22) kleiner oder gleich einer Schwellendrehzahl ist, den Turbokompressor (22) als im Pump-Zustand befindlich betrachtet und die Steuerung des Umschaltmechanismus (28, 281, 282) vornimmt.

7. Kältekreislaufvorrichtung (100, 200) nach einem der Ansprüche 1 bis 6,
wobei die Steuerung (30), wenn eine Drehzahl des Turbokompressors (22) höher als eine Schwellendrehzahl ist und ein Verhältnis eines Enddrucks des Turbokompressors (22) zu einem Saugdruck von ihm größer oder gleich einem Schwellendruckverhältnis ist, den Turbokompressor (22) als im Pump-Zustand befindlich betrachtet und die Steuerung des Umschaltmechanismus (28, 281, 282) vornimmt.

8. Kältekreislaufvorrichtung (100, 200) nach einem der Ansprüche 1 bis 7,
wobei das Kältemittel ein Kältemittel umfasst, dessen Sättigungsdampfdruck bei normaler Temperatur ein negativer Druck ist.

9. Steuerverfahren für eine Kältekreislaufvorrichtung (100, 200), umfassend:
einen Verdampfer (21), der flüssigphasiges Kältemittel zurückhält und das flüssigphasige Kältemittel verdampft, um gasphasiges Kältemittel zu erzeugen;
einen Turbokompressor (22), der das im Verdampfer (21) erzeugte gasphasige Kältemittel verdichtet;
einen Verflüssiger (23), der das vom Turbokompressor (22) verdichtete gasphasige Kältemittel verflüssigt, um flüssigphasiges Kältemittel zu erzeugen, und der das im Verflüssiger (23) erzeugte flüssigphasige Kältemittel zurückhält;
einen ersten Strömungskanal (24a), der mit einem ersten Teil des Verdampfers (21) verbunden ist;
einen zweiten Strömungskanal (24b), der mit einem zweiten Teil des Verdampfers (21) verbunden ist;
einen dritten Strömungskanal (25a), der mit einem ersten Teil des Verflüssigers (23) verbunden ist;
einen vierten Strömungskanal (25b), der mit einem zweiten Teil des Verflüssigers (23) verbunden ist;
einen Umschaltmechanismus (28, 281, 282), der ein Ventil umfasst und der unter Verwendung des Ventils einen Verschaltungszustand zwischen dem ersten Strömungskanal (24a), dem zweiten Strömungskanal (24b), dem dritten Strömungskanal (25a) und dem vierten Strömungskanal (25b) zu einem Verbindungszustand umschaltet, wobei der eine Verbindungszustand aus einer Vielzahl von Verbindungszuständen ausgewählt wird, die einen ersten Verbindungszustand umfasst, in dem der erste Strömungskanal (24a) und der vierte Strömungskanal (25b) miteinander verbunden sind und der zweite Strömungskanal (24b) und der dritte Strömungskanal (25a) miteinander verbunden sind;
eine erste Pumpe (26), die auf dem zweiten Strömungskanal (24b) angeordnet ist und das in dem Verdampfer (21) zurückgehaltene flüssigphasige Kältemittel zum Umschaltmechanismus (28, 281, 282) fördert; und
eine zweite Pumpe (27), die auf dem vierten Strömungskanal (25b) angeordnet ist und das in dem Verflüssiger (23) zurückgehaltene flüssigphasige Kältemittel zum Umschaltmechanismus (28, 281, 282) fördert,
**dadurch gekennzeichnet, dass**
das Steuerverfahren das Steuern des Umschaltmechanismus (28, 281, 282) umfasst, um den Verschaltungszustand zwischen dem ersten Strömungskanal (24a), dem zweiten Strömungskanal (24b), dem dritten Strömungskanal (25a) und dem vierten Strömungskanal (25b) auf den ersten Verbindungszustand einzustellen, wenn sich der Turbokompressor (22) in einem Pump-Zustand oder einem Sperr-Zustand befindet.

## Revendications

1. Appareil à cycle de réfrigération (100, 200) comprenant :
un évaporateur (21) qui retient un fluide frigorigène en phase liquide et qui évapore le fluide frigorigène en phase liquide pour générer un fluide frigorigène en phase gazeuse ;
un turbocompresseur (22) qui comprime le fluide frigorigène en phase gazeuse généré dans l'évaporateur (21) ;
un condenseur (23) qui condense le fluide frigorigène en phase gazeuse comprimé par le turbocompresseur (22) pour générer un fluide frigorigène en phase liquide et qui retient le fluide frigorigène en phase liquide généré dans le condenseur(23);
un premier passage d'écoulement (24a) qui est relié à une première partie de l'évaporateur (21) ;
un deuxième passage d'écoulement (24b) qui est relié à une deuxième partie de l'évaporateur (21) ;
un troisième passage d'écoulement (25a) qui est relié à une première partie du condenseur(23) ;
un quatrième passage d'écoulement (25b) qui est relié à une deuxième partie du condenseur (23) ;
un mécanisme de commutation (28, 281, 282) qui comprend une soupape et qui commute un état d'interraccordement parmi le premier passage d'écoulement (24a), le deuxième passage d'écoulement (24b), le troisième passage d'écoulement (25a) et le quatrième passage d'écoulement (25b) dans un état de raccordement au moyen de la soupape, ledit un état de raccordement étant sélectionné parmi une pluralité d'états de raccordement, comprenant un premier état de raccordement, dans lequel le premier passage d'écoulement (24a) et le quatrième passage d'écoulement (25b) sont reliés l'un à l'autre et le deuxième passage d'écoulement (24b) et le troisième passage d'écoulement (25a) sont reliés l'un à l'autre ;
une première pompe (26) qui est disposée sur le deuxième passage d'écoulement (24b) et qui fournit le fluide frigorigène en phase liquide retenu dans l'évaporateur (21) vers le mécanisme de commutation (28, 281, 282) ; et
une deuxième pompe (27) qui est disposée sur le quatrième passage d'écoulement (25b) et qui fournit le fluide frigorigène en phase liquide retenu dans le condenseur (23) vers le mécanisme de commutation (28, 281, 282),
**caractérisé en ce que**
l'appareil à cycle de réfrigération (100, 200) comprend en outre :
un dispositif de commande (30) qui commande le mécanisme de commutation (28, 281, 282) pour régler l'état d'interraccordement parmi le premier passage d'écoulement (24a), le deuxième passage d'écoulement (24b), le troisième passage d'écoulement (25a) et le quatrième passage d'écoulement (25b) dans le premier état de raccordement lorsque le turbocompresseur (22) est dans un état de surtension ou dans un état d'étranglement.

2. Appareil à cycle de réfrigération (100, 200) selon la revendication 1,
la première partie de l'évaporateur (21) étant positionnée au-dessus d'une surface de liquide du fluide frigorigène en phase liquide retenu dans l'évaporateur (21) ;
la deuxième partie de l'évaporateur (21) étant positionnée au-dessous de la surface de liquide du fluide frigorigène en phase liquide retenu dans l'évaporateur (21) ; et
la pluralité d'états de raccordement comprenant en outre un deuxième état de raccordement dans lequel le premier passage d'écoulement (24a) et le deuxième passage d'écoulement (24b) sont reliés l'un à l'autre et le troisième passage d'écoulement (25a) et le quatrième passage d'écoulement (25b) sont reliés l'un à l'autre.

3. Appareil à cycle de réfrigération (100, 200) selon la revendication 2,
où, lorsque le turbocompresseur (22) est dans l'état de surtension ou dans l'état d'étranglement, le dispositif de commande (30) commande le mécanisme de commutation (28, 281, 282) pour commuter l'état d'interraccordement entre le premier passage d'écoulement (24a), le deuxième passage d'écoulement (24b), le troisième passage d'écoulement (25a) et le quatrième passage d'écoulement (25b) du deuxième état de raccordement dans le premier état de raccordement.

4. Appareil à cycle de réfrigération (200) selon l'une quelconque des revendications 1 à 3, comprenant en outre :
une première soupape (36) qui est disposée sur le premier passage d'écoulement (24a) et qui possède un degré d'ouverture réglable ; et
une deuxième soupape (37) qui est disposée sur le troisième passage d'écoulement (25a) et qui possède un degré d'ouverture réglable.

5. Appareil à cycle de réfrigération (100, 200) selon la revendication 4,
où, lorsque l'état d'interraccordement entre le premier passage d'écoulement (24a), le deuxième passage d'écoulement (24b), le troisième passage d'écoulement (25a) et le quatrième passage d'écoulement (25b) est dans le premier état de raccordement et qu'une différence entre une température du fluide frigorigène en phase liquide retenu dans le condenseur (23) et une température du fluide frigorigène en phase liquide retenu dans l'évaporateur (21) est supérieure ou égale à un seuil, le dispositif de commande (30) commande la première soupape (36) pour augmenter le degré d'ouverture de la première soupape (36) et commande la deuxième soupape (37) pour augmenter le degré d'ouverture de la deuxième soupape (37).

6. Appareil à cycle de réfrigération (100, 200) selon l'une quelconque des revendications 1 à 5,
où, lorsqu'une vitesse de rotation du turbocompresseur (22) est inférieure ou égale à une vitesse de rotation seuil, le dispositif de commande (30) considère le turbocompresseur (22) comme étant dans l'état de surtension et exécute la commande du mécanisme de commutation (28, 281, 282).

7. Appareil à cycle de réfrigération (100, 200) selon l'une quelconque des revendications 1 à 6,
où, lorsqu'une vitesse de rotation du turbocompresseur (22) est supérieure à une vitesse de rotation de seuil et qu'un rapport d'une pression de refoulement du turbocompresseur (22) à une pression d'aspiration correspondante est supérieur ou égal à un rapport de pressions de seuil, le dispositif de commande (30) considère le turbocompresseur (22) comme étant dans l'état de surtension et exécute la commande du mécanisme de commutation (28, 281, 282).

8. Appareil à cycle de réfrigération (100, 200) selon l'une quelconque des revendications 1 à 7,
le fluide frigorigène comprenant un fluide frigorigène dont la pression de vapeur saturante à température ordinaire est une pression négative.

9. Procédé de commande pour un appareil à cycle de réfrigération (100, 200) comprenant :
un évaporateur (21) qui retient un fluide frigorigène en phase liquide et qui évapore le fluide frigorigène en phase liquide pour générer un fluide frigorigène en phase gazeuse ;
un turbocompresseur (22) qui comprime le fluide frigorigène en phase gazeuse généré dans l'évaporateur (21) ;
un condenseur (23) qui condense le fluide frigorigène en phase gazeuse comprimé par le turbocompresseur (22) pour générer un fluide frigorigène en phase liquide et qui retient le fluide frigorigène en phase liquide généré dans le condenseur(23);
un premier passage d'écoulement (24a) qui est relié à une première partie de l'évaporateur (21) ;
un deuxième passage d'écoulement (24b) qui est relié à une deuxième partie de l'évaporateur (21) ;
un troisième passage d'écoulement (25a) qui est relié à une première partie du condenseur (23) ;
un quatrième passage d'écoulement (25b) qui est relié à une deuxième partie du condenseur (23) ;
un mécanisme de commutation (28, 281, 282) qui comprend une soupape et qui commute un état d'interraccordement parmi le premier passage d'écoulement (24a), le deuxième passage d'écoulement (24b), le troisième passage d'écoulement (25a) et le quatrième passage d'écoulement (25b) dans un état de raccordement au moyen de la soupape, ledit un état de raccordement étant sélectionné parmi une pluralité d'états de raccordement comprenant un premier état de raccordement dans lequel le premier passage d'écoulement (24a) et le quatrième passage d'écoulement (25b) sont reliés l'un à l'autre et le deuxième passage d'écoulement (24b) et le troisième passage d'écoulement (25a) sont reliés l'un à l'autre ;
une première pompe (26) qui est disposée sur le deuxième passage d'écoulement (24b) et qui fournit le fluide frigorigène en phase liquide retenu dans l'évaporateur (21) vers le mécanisme de commutation (28, 281, 282) ; et
une deuxième pompe (27) qui est disposée sur le quatrième passage d'écoulement (25b) et qui fournit le fluide frigorigène en phase liquide retenu dans le condenseur (23) vers le mécanisme de commutation (28, 281, 282),
**caractérisé en ce que**
le procédé de commande comprend la commande du mécanisme de commutation (28, 281, 282) pour régler l'état d'interraccordement parmi le premier passage d'écoulement (24a), le deuxième passage d'écoulement (24b), le troisième passage d'écoulement (25a) et le quatrième passage d'écoulement (25b) dans le premier état de raccordement lorsque le turbocompresseur (22) est dans un état de surtension ou dans un état d'étranglement.
